# EUROPÄISCHE PATENTSCHRIFT

(11) **EP 1 324 314 B1**
(45) Veröffentlichungstag und Bekanntmachung des Hinweises auf die Patenterteilung: **06.10.2004**
(21) Anmeldenummer: 01129647.2
(22) Anmeldetag: 12.12.2001
(51) Int. Cl.: G10L 15/06

(54) **Spracherkennungssystem und Verfahren zum Betrieb eines solchen**
Speech recognition system and method for operating the same
Système pour la reconnaissance de la parole et méthode d'opération d'un tel système

(43) Veröffentlichungstag der Anmeldung: 02.07.2003
(73) Patentinhaber: SIEMENS AKTIENGESELLSCHAFT, 80333 München (DE)
(72) Erfinder: Hoffmann, Gerhard, 82223 Eichenau (DE); Schneider, Tobias, Dr., 81825 München (DE)

(56) Entgegenhaltungen:
- WO-A-01/78245
- DE-C- 19 751 123
- US-A- 5 212 730
- US-A- 5 732 187
- US-A- 6 005 927

## Beschreibung

Die Erfindung betrifft ein Sprachverarbeitungssystem sowie - verfahren, daß speziell auf die Erstellung von Kurznachrichten in einem oder für ein Telekommunikationsendgerät zugeschnitten ist.

Der derzeit gültige Mobilfunkstandard GSM definiert Rahmenbedingungen für den Versand von Textnachrichten begrenzter Länge - Kurznachrichten bzw. -mitteilungen - über die Mobilfunknetze, wofür sich die Bezeichnung SMS (Short Messaging Service) auch im Alltag eingebürgert hat. SMS-Nachrichten haben sich in den GSM-Netzen als Kommunikationsmittel für Kurzmitteilungen etabliert. Durch die vorliegende Erfindung wird die Eingabe von SMS-Nachrichten auf mobilen Endgeräten erleichtert.

Ungeachtet der vielfältigen Möglichkeiten zum Versand von SMS aus dem Internet oder über Call-Center oder ihrer erleichterten Erstellung auf PCs oder Laptops wird die überwältigende Mehrheit aller heute versandten SMS-Nachrichten direkt auf mobilen Endgeräten erstellt. Diese SMS müssen relativ umständlich mit der vorhandenen Zwölfertastatur eingegeben werden. Auch am Markt etablierte Verfahren zur Reduktion der Anzahl der Tastendrücke, wie Tegic T9, schaffen nur bedingt Erleichterungen und Geschwindigkeitserhöhungen bei der SMS-Eingabe. Zudem erfordert die Nutzung des T9-Modus eine gewisse Routine bei der Erstellung der SMS.

Die bereits erwähnte Eingabe über einen PC oder mobilen Computer ist aufgrund der deutlich besser bedienbaren Tastatur wesentlich leichter, und im Grunde sind auch hoch entwickelte Sprachverarbeitungssysteme für den Computereinsatz zur Eingabe von Kurznachrichten über den PC geeignet. All diese Möglichkeiten sind aber eben an die Verfügbarkeit eines entsprechenden Computers mit voller alphanumerischer Tastatur oder den Hard- und Softwareressourcen für eine fortgeschrittene Sprachverarbeitung geknüpft. Diese Ressourcen stehen den wenigsten SMS-Nutzern in den typischen Anwendungssituationen zur Verfügung.

DE 197 51 123 C1 beschreibt eine Vorrichtung sowie ein Verfahren zur sprecherunabhängigen Sprachnamenwahl für Telekommunikations-Endeinrichtungen. Die Vorrichtung weist einen phonem-basierten Spracherkenner, eine alphanumerische Tastatur zur Texteingabe sowie eine Einrichtung zur Text-Phonem-Umsetzung auf. Ein Benutzer gibt einen Namen über die Tastatur ein. Im Umsetzer wird dem Namen ein digitales Wortmodell, d. h. eine Phonemfolge, zugeordnet. Namen und zugeordnete Phonemfolge werden gespeichert. Spricht der Benutzer einen Namen ein, vergleicht der Spracherkenner die eingesprochene Phonemfolge mit den gespeicherten Phonemfolgen, identifiziert diejenige Folge mit größter Übereinstimmung, und entnimmt dem Speicher den zugeordneten Text, d.h. den Namen. Es können lediglich auf vereinfachtem Weise fest vorgegebene Nachrichten aufgerufen und versendet werden.

WO 01/78245 A1 beschreibt ein Verfahren zum Erstellen und Senden von SMS-Nachrichten mit Sprachunterstützung. Hierzu spricht der Nutzer ein Nachrichten-Kennwort ein. Dieses Kennwort identifiziert eine vorgegebene Nachricht. Diese kann sodann durch zusätzliche eingegebene Sprachkommandos gesendet werden.

Der Erfindung liegt daher die Aufgabe zugrunde, ein verbessertes System und Verfahren zur Eingabe von SMS direkt an einem (insbesondere mobilen) Telekommunikations-Endgerät bereitzustellen.

Diese Aufgabe wird in ihrem Vorrichtungsaspekt durch ein System mit den Merkmalen des Anspruchs 1 und in ihrem Verfahrensaspekt durch ein Verfahren mit den Merkmalen des Anspruchs 14 gelöst.

Die Erfindung schließt den grundlegenden Gedanken ein, von der bisher üblichen Texteingabe zur Erstellung von Kurznachrichten fast völlig abzugehen. Sie schließt weiter den Gedanken ein, diese - ungeachtet der sehr begrenzten Ressourcen (Verarbeitungs- und Speicherkapazität) eines kleinen, handgehaltenen Telekommunikations-Endgerätes - im wesentlichen durch die für den Nutzer unübertroffen einfache und komfortable Spracheingabe zu ersetzen. Der Effekt der Erfindung beruht auf der Reduzierung des Vokabularumfanges auf eine für mobile Endgeräte adäquate Größe durch Ausnutzung von Vorkonfigurationen und einem selbstlernenden System.

Die vorliegende Erfindung betrifft somit Verfahren bzw. Aspekte der sprachgesteuerten Eingabe von SMS-Nachrichten, die einzeln oder in Kombination verwendet werden können. Es handelt sich dabei um die sprachgesteuerte Auswahl von vordefinierten Wörtern/Templates bzw. die sprachgesteuerte Auswahl von Wortgruppen über Sprachbefehle bzw. Metaphern und ein selbstlernendes System zur Konfiguration eines Spracherkenners mit dem vom Benutzer verwendeten SMS-Wortschatz.

### Sprachgesteuerte SMS-Templates

Bei der SMS-Erstellung ist die Eingabe von freien Texten möglich. Eine vollständige Eingabe der Nachricht per Sprache würde ein fehlerfrei arbeitendes Diktiersystem (mit einem Wortschatz von >= 50000 Wörtern) auf dem mobilen Endgerät erfordern. Wegen der limitierten Ressourcen auf den Endgeräten ist dies derzeit technisch nicht realisierbar. Bedenkt man aber, daß viele Inhalte von SMS-Nachrichten ähnlich sind, reduziert sich der aktiv verwendete Wortschatz deutlich, und man kann oftmals auch mit vorgefertigten Templates arbeiten.

Auf dem mobilen Endgerät wird ein sprecherunabhängiger Spracherkenner implementiert, der aufgrund der Ressourcenbeschränkungen nur eine begrenzte Anzahl von Wörtern im aktiven Vokabular unterstützt (z.B. 1000 Worte). Im Auslieferungszustand des Gerätes ist die Spracherkennung vorkonfiguriert mit den wichtigsten allgemein gebräuchlichen Worten in SMS-Nachrichten wie z.B. "heute", "gestern", "morgen", "Treffen", "Kino" usw.

Diese Vorbelegungsinformation kann individuell durch den Benutzer ergänzt oder modifiziert werden (bei Einhaltung einer Maximalanzahl unterstützter Wörter). Die Änderungen können beispielsweise sprecherunabhängig per Texteingabe und anschließender automatischen Umsetzung in die für den Erkenner verständliche Lautschrift erfolgen (Text-Phonem-Umsetzung) oder sprecherabhängig durch Texteingabe und anschließendes Aufsprechen des Begriffes. Dadurch lässt sich das zu unterstützende Vokabular individuell personalisieren, ohne dabei die Resssourcen-Dimensionen eines Diktiersystems zu erhalten. Die Änderungen können insbesondere direkt am Gerät oder mehrstufig über PC und Download auf das TK-Endgerät durchgeführt werden.

### Auswahl von Text durch Voice-Metaphern

Statt einzelner Wörter können mit einem Sprachbefehl auch kleine Texte, sog. Templates, abgerufen werden wie z.B. "schöne Grüße", "viele Grüße", "ich komme", "kommst Du", "ich wollte", "kannst Du", "bis bald" usw. Denkbar ist auch die sprachliche Eingabe von Metaphern für Wortgruppen wie z.B. "Begrüßung" oder "Endfloskel". Nach erfolgter Erkennung dieser Worte werden auf dem Display einige mögliche Textvarianten zu dieser Metapher angeboten. Zum Beispiel kann auf "Begrüßung" dann ein Angebot folgen wie: "Guten Morgen, Hallo, Hallo wie geht's, Lieber, Liebe ...". Der Benutzer kann den von ihm gewünschten Eintrag dann durch manuelle Selektion oder durch Spracheingabe (z.B. der entsprechenden Platznummer) auswählen. Die Listen, welche hinter den einzelnen Metaphern stehen, lassen sich vom Benutzer individuell erweitern bzw. anpassen.

### Selbstlernendes Vokabularsystem für sprachgesteuerte SMS Eingabe

Zur Adaption des Standardwortschatzes an das Kommunikationsverhalten des Benutzer kann eine automatische, selbstlernende Anpassung des Basiswortschatzes realisiert werden. Dazu werden je nach Einstellungen alle gesendeten und/oder empfangenen Nachrichten vom System analysiert. Dem Spracherkenner bisher nicht bekannte Wörter werden mittels auf dem Gerät vorhandener Text-To-Phoneme Umsetzung in eine für den Spracherkenner verständliche Form umgewandelt und in den Wortschatz aufgenommen. Der zu unterstützende Wortschatz wird dabei auf eine für "Embedded Devices" adäquate Höchstanzahl von Worten beschränkt werden. Ist die Höchstgrenze erreicht, können durch Substitutionsstrategien (z.B. first-in-first-out (FIFO), Priorisierung nach Häufigkeit des Auftretens) die aktiven Wortschätze weiter adaptiert werden. Da die Wortschätze in den SMS-Nachrichten für einen bestimmten Benutzer in der Regel relativ klein sind, entsteht über diesen Prozess nach und nach ein personalisiertes System, welches es dem Benutzer erlaubt seine SMS fast vollständig per Sprache einzugeben.

Während das eigentliche Spracherkennermodul bevorzugt als an sich bekanntes - aber mit einem an die Voraussetzungen eines kleines handgehaltenen elektronischen Gerätes angepaßten Ressourcenbedarf konfiguriertes - Hidden-Markov-Modell ausgeführt ist, wird das Text-Phonem-Wandlermodul bevorzugt auf der Basis eines neuronalen Netzes realisiert. Auch die Ausführung derartiger Wandler auf Basis neuronaler Netze ist an sich bekannt und bedarf daher hier keiner weiteren Erläuterung für den Fachmann.

Als Texteingabe-Schnittstelle dient bevorzugt eine "klassische" Eingabetastatur, insbesondere eine geräteintegrierte alphanumerische Tastatur mit Tasten-Mehrfachbelegung, oder ein entsprechend ausgebildeter Touchscreen aufweist. Es ist auch möglich, die Texteingabe mit Hilfe einer (von manchen Herstellern lieferbaren) ansteckbaren Zusatztastatur oder über einen angeschlossenen PC oder Laptop/Notebook vorzunehmen.

Nach obigem ist in dem Vokabular-Steuermodul ein Substitutionssteueralgorithmus zur Ersetzung von Elementen des Basiswortschatzes durch neue Worte bzw. Templates nach einer vorbestimmten Substitutionsstrategie, insbesondere in Abhängigkeit von dem Zeitpunkt und/oder der Häufigkeit ihres Auftretens an der Texteingabe-Schnittstelle, implementiert. Hierdurch wird im Laufe der Zeit eine den Gewohnheiten des konkreten Nutzers und seiner Kommunikationspartner bestmöglich angepaßte Vokabularstruktur gebildet. Andererseits ist es - mit einfacheren Hard- und Softwaremitteln - auch möglich, eine laufende Aktualisierung des Vokabulars nach dem FIFO-Prinzip vorzunehmen, d. h. seit langem nicht benutzte Worte aus dem Vokabular zu eliminieren und so den Wortschatz laufend zu erneuern.

Wie aus den obigen Anmerkungen bereits deutlich wird, können als Elemente des Basisvokabulars ebenso wie des aktuellen Vokabulars des Spracherkenners neben Worten auch Wortfolgen (Phrasen) vorliegen, und beide Arten von Elementen kann man zusammenfassend als "Templates" bezeichnen. Je stärker die Kurznachrichten-Kommunikation eines Nutzers vorgeprägten Ritualen folgt, desto effizienter ist die Abspeicherung von ganzen Phrasen neben einzelnen Worten.

Zweckmäßigerweise werden die Wortfolgen mit einem Sprachbefehl oder einer Metapher verknüpft, über deren Spracheingabe sie im Betrieb des Systems abgerufen werden. Dabei lassen sich verschiedene Phrasen ein und derselben Metapher oder ein und demselben Sprachbefehl zuordnen und in Reaktion auf eine entsprechende Eingabe zur Anzeige bringen, so daß der Nutzer die in der jeweiligen Situation gewünschte Wortfolge auswählen kann. Auch dies kann durch einen Sprachbefehl erfolgen, aber auch in konventioneller Weise durch Scrollen der Anzeige und "OK"-Tastendruck an der gewünschten Position.

Aus den obigen Erläuterungen ergibt sich, daß ein Vokabularspeicher des Spracherkenners zweckmäßigerweise in mehrere getrennt ansprech- und handhabbare Speicherbereiche aufgeteilt ist. Ein erster Speicherbereich für das vom Hersteller mitgelieferte Basisvokabular und dessen Ergänzungen bzw. Substitute, die im Betrieb des Systems akkumuliert werden, ist dabei von einem anderen Speicherbereich getrennt, in dem bewußt vom Nutzer eingegebene Templates gespeichert sind. Dieser letztere Speicherbereich ist durch neue Einträge in den ersteren sinnvollerweise nicht überschreibbar, allenfalls durch aktuelle Eingaben des Nutzers.

Vorteile und Zweckmäßigkeiten ergeben sich im übrigen aus den Unteransprüchen sowie der nachfolgenden detaillierteren Erläuterung anhand der Figuren. Von diesen zeigen:
Fig. 1 eine Prinzipdarstellung wesentlicher Komponenten eines Spracherkennungssystems gemäß der vorliegenden Erfindung und
Fig. 2 eine schematische Darstellung eines als Bestandteil eines Mobiltelefons ausgeführten Spracherkennungssystems in einer gegenüber Fig. 1 modifizierten Ausführung.

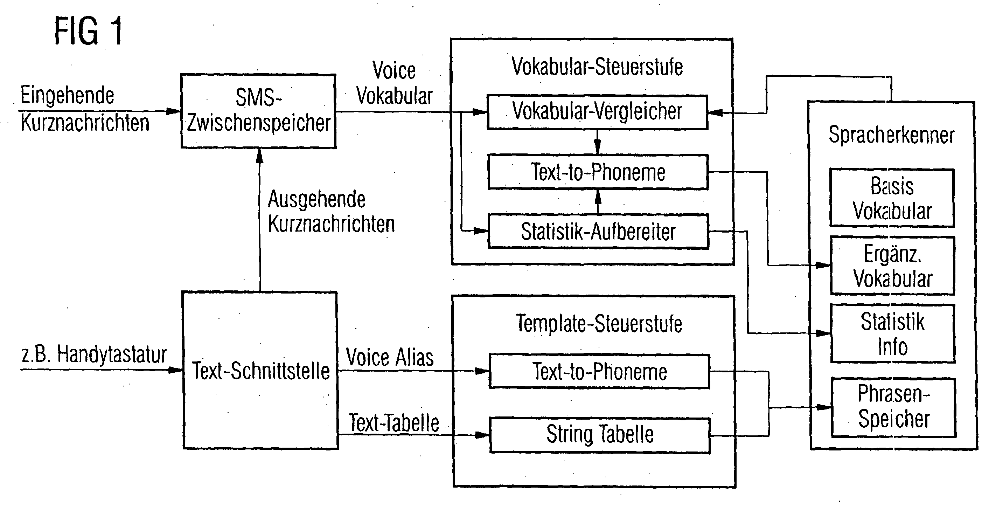

Wie aus Fig. 1 zu entnehmen ist, können als wesentliche Bestandteile eines bevorzugten Spracherkennungssystems gemäß der Erfindung eine Vokabular-Steuerstufe, eine Template-Steuerstufe, eine Text-Schnittstelle und ein SMS-Zwischenspeicher sowie der eigentliche Spracherkenner (mit zusätzlichen Komponenten gegenüber einem herkömmlichen Spracherkenner) angesehen werden. Das System steht über die Text-Schnittstelle mit einer Texteingabeeinrichtung, beispielsweise einer Handytastatur, in Verbindung. Dem SMS-Zwischenspeicher werden sowohl über die Tastatur und die Text-Schnittstelle erstellte ausgehende Kurznachrichten als auch über das Handy empfangene eingehende Kurznachrichten zugeführt. Die Text-Schnittstelle ist ausgangsseitig mit Eingängen der Template-Steuerstufe verbunden, und zwar mit einer "Text-to-Phoneme"-Wandlerbaugruppe und einer Baugruppe "String Tabelle". Diesen Baugruppen werden über die Text-Schnittstelle ein Voice Alias bzw. eine Text-Tabelle zugeführt, und hieraus werden eine Phonemfolge bzw. eine String Tabelle erzeugt. Diese werden letztlich in einem Phrasen-Speicher des Spracherkenners abgelegt.

Der Ausgang des SMS-Zwischenspeichers steht mit einem Vokabular-Vergleicher sowie einem Statistik-Aufbereiter innerhalb der Vokabular-Steuerstufe in Verbindung. Diese sind jeweils ausgangsseitig mit einer weiteren "Text-to-Phoneme"-Wandlerstufe verbunden, welche ihrerseits mit einem Ergänzungsvokabular-Speicher im Spracherkenner verbunden ist. Die Statistik-Aufbereitungseinheit ist außerdem mit einer Baugruppe "Statistik Info" im Spracherkenner verbunden, um dort aus den aus- und eingehenden Kurznachrichten gewonnene statistische Informationen für den Betrieb des Spracherkenners abzulegen.

Der Vokabular-Vergleicher steht über einen weiteren Eingang mit einem Ausgang des Spracherkenners in Verbindung und erhält von dort die Vergleichsbasis für die Auswertung der aktuellen SMS zur Ergänzung des im Spracherkenner gespeicherten Vokabulars.

Die Funktionsweise dieses Spracherkenners ergibt sich aus den obigen allgemeinen Erläuterungen und der Figur selbst, so daß hier keine weitergehende Funktionsbeschreibung erforderlich ist.

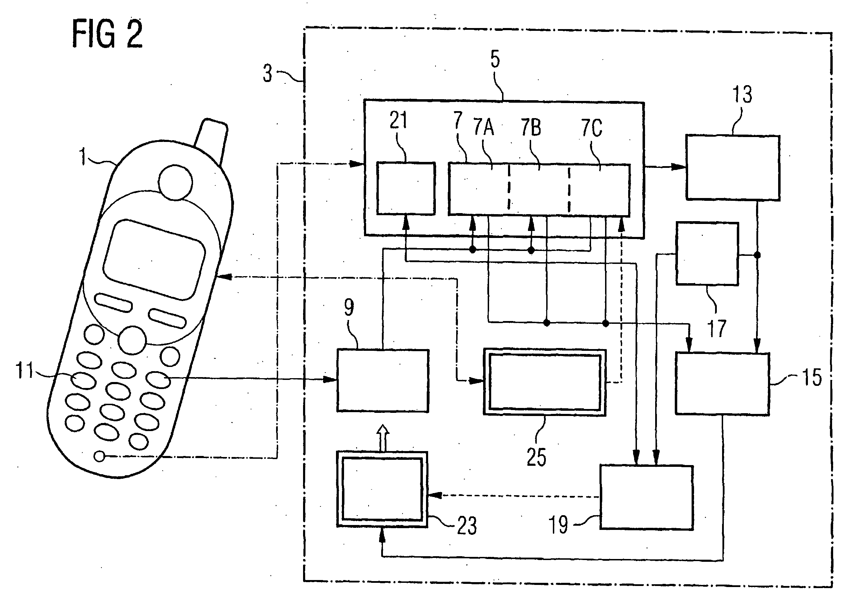

Das Spracherkennungssystem 3 eines Mobiltelefons 1 gemäß Fig. 2 umfaßt einen HMM-Spracherkenner 5 mit geringem Ressourcenbedarf und einem Vokabular- und Phrasenspeicher 7, welcher einen Basis-Speicherbereich 7A, einen Ergänzungswortschatz-Speicherbereich 7B und einen Phrasen-Speicherbereich 7C umfaßt. Im Basis-Speicherbereich 7A ist ein Basisvokabular des Spracherkenners 5 invariant gespeichert, d. h. die dort gespeicherten Elemente des Vokabulars des Spracherkenners sind weder lösch- noch überschreibbar. Im Ergänzungswortschatz-Speicherbereich 7B werden bei diesem Beispiel sowohl durch den Nutzer per Texteingabe neu eingegebene Worte als auch durch das Spracherkennungssystem auf die weiter unten beschriebene Weise bereitgestellte Worte zusätzlich eingespeichert, wobei die erstgenannten Elemente mit einem Flag als aktive Eingaben des Nutzers gekennzeichnet werden und ebenfalls nicht löschbar sind. Im Phrasen-Speicherbereich 7C sind bei Auslieferung des Mobiltelefons 1 bereits - in Zuordnung zu jeweils einem Sprachbefehl bzw. einer Metapher - Wortfolgen zu Standards-Lebenssituationen gespeichert, welche der Nutzer auf ebenfalls weiter unten beschriebene Weise in eine Kurznachricht einbauen kann.

Zur Realisierung der Erfindung kann ein HMM-basierter Spracherkenner verwendet werden, der einen Leistungsbereich von 1000 Worten z. B. für die Sprache Deutsch besitzt und der damit klein genug ist, um auf embedded Devices ablauffähig zu sein. Der Spracherkenner 5 wird für die Auslieferung mit 1000 allgemein gebräuchlichen Worten für die Sprache Deutsch vorkonfiguriert. Die Wörter für die Vorbelegungsinformation werden dabei aus der Analyse einer großen Anzahl verschickter SMS-Nachrichten von vielen Benutzern gewonnen.

Desweiteren wird auf dem Mobiltelefon 1 ein Text-Phonern-Wandler 9 auf Basis eines Neuronalen Netzes implementiert, das die Umsetzung von Texteingaben in die für den Spracherkenner notwendige Lautschrift realisiert. Dieser ermöglicht es dem Nutzer, über die Zwölfertastatur 11 des Mobiltelefons 1 neue Worte, die er in den Ergänzungswortschatz-Speicherbereich 7B einspeichern möchte, als Text einzugeben, und stellt die speicherfähige Repräsentation bereit.

Weiterhin ermöglicht der Text-Phonem-Wandler 9 die Realisierung einer Selbstlernfunktion, zu deren Ausführung ein Zwischenspeicher 13 zur temporären Speicherung des Vokabulars empfangener und/oder gesendeter Kurznachrichten, eine mit diesem sowie dem Vokabular- und Phrasenspeicher 7 verbundene Vokabular-Vergleichereinheit 15 zum Vergleich der jeweils gespeicherten Wortschätze, eine statistische Auswertungseinheit 17 zur Bestimmung statistischer Kenngrößen der in den empfangenen bzw. gesendeten Kurznachrichten neu aufgetretenen Worte und eine Kenngrößen-Vergleichereinheit 19 zum Vergleich dieser Kenngrößen mit gespeicherten Kenngrößen des Basisvokabulars vorgesehen sind. Die Kenngrößen-Vergleichereinheit 19 ist eingangsseitig zum einem mit der Auswertungseinheit 17 und zum anderen mit einem Kenngrößenspeicher 21 des HMM-Spracherkenners 5 verbunden, wo Relevanzwerte der Elemente des Basisvokabulars gespeichert sind. Zur Steuerung der Aktualisierung des Vokabulars ist eine Vokabular-Steuerstufe 23 vorgesehen, die ihrerseits Steuerinformationen von der Vokabuluar-Vergleichereinheit 15 und der Kenngrößen-Vergleichereinheit 19 erhält.

Zur automatischen Anpassung/Personalisierung des Vokabulars kann der Benutzer die Selbstlernfunktion des Systems aktivieren. Dabei kann sowohl die Analyse eingehender als auch ausgehender SMS-Nachrichten freigeschaltet werden. Die Aktivierung der Analyse eingehender SMS-Nachrichten ist speziell dann interessant, wenn die manuelle Eingabefunktionalität beim mobilen Endgerät stark beschränkt ist wie z.B. bei einem Uhren-Handy.

Bei aktiviertem Selbstlernsystem werden alle Wörter jeder ein- und/oder ausgehenden SMS-Nachricht mit dem vorhandenen Basisvokabular verglichen. Sind in der SMS-Nachricht Wörter enthalten, die nicht im Basisvokabular des Erkenners sind, so werden diese mittels Text-Phonem-Wandlung dem Vokabular nach einer Substitutionsstrategie hinzugefügt. Für die Substitutionsstrategie ist jedes Wort im Vokabular mit dem Verwendungsdatum und der Verwendungshäufigkeit gekennzeichnet. Für bei der Auslieferung voreingestellte Wörter werden Initialwerte verwendet. Ein neu einzutragendes Wort substituiert dabei das Wort mit der geringsten Verwendungshäufigkeit und dem ältesten Verwendungsdatum. Dadurch entsteht Schritt für Schritt ein individuell personalisiertes System.

Zusätzlich wird dem Benutzer die Möglichkeit angeboten, über eine Template-Menüsteuerung 25 eigene, individuelle Templates zu erstellen und diese mit einem Sprachbefehl (Voice Alias) zu verknüpfen. Ein Template kann dabei aus einem oder mehreren Wörtern bestehen. Dazu wird in Tabellenform der Template-Text eingegeben und einem - ebenfalls per Tastatur 11 eingegebenen - Voice Alias (Sprachbefehl) als Text zugeordnet.

Der Text-Phonem-Wandler 9 übersetzt den Voice Alias und trägt ihn in das Vokabular des Spracherkenners ein; der Template-Text selbst wird in den Phrasen-Speicherbereich 7C und der Sprachbefehl in den Ergänzungswortschatz-Speicherbereich 7B abgelegt. Der Voice Alias ersetzt dabei ein Wort des Vokabulars nach der bereits beschriebenen Substitutionsstrategie.

Der Voice Alias wird als solcher gekennzeichnet. Er unterlieg nicht der Substitutionsstrategie, da er einen expliziten Benutzereintrag repräsentiert. Er kann nur vom Benutzer selbst geloscht werden.

Als Zusatzfunktion können einem Voice Alias auch mehrere Template-Texte zugeordnet werden. Bei Aufruf des Voice Alias werden dem Benutzer dann durch die Menüsteuerung 23 alle Template-Texte mit einer vorangestellten Nummer zur Auswahl gestellt. Die Template-Auswahl erfolgt danach manuell durch Tastenselektion oder durch Spracheingabe der Template-Nummer. Zum Beispiel könnte der Voice Alias "Gruss" mit den Template-Texten "Liebe Grüsse" und "Mit freundlichen Grüßen" verknüpft sein. Beim Einsprechen von "Gruss" werden dem Benutzer dann die Texte "1 Liebe Grüsse" und "2 Mit freundlichen Grüßen" angezeigt. Durch nachfolgendes Einsprechen der Template-Nummer "2" wird der Text "Mit freundlichen Grüßen" selektiert.

Um einen ausgewogenen Anteil zwischen Basisvokabular und benutzerdefinierten Templates zu erreichen, wird ein Maximum von Template-Einträgen voreingestellt z.B. 100 Benutzer-Templates. Der Benutzer kann bis zu diesem Maximalwert eigene Voice Aliase definieren, die jeweils einen Eintrag aus dem vorhandenen Basivokabular substituieren. Ist die Maximalgrenze erreicht, erhält der Benutzer eine entsprechende Warnmeldung. Der Benutzer kann über eine Option den maximalen Template-Wert verändern. Im Extremfall kann erden Maximalwert von 1000 für die Templates wählen, was bei Ausnutzung des Maximalwertes einen Wegfall des Basisvokabulars und der Analysefunktion bedeutet.

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

## Patentansprüche

1. Spracherkennungssystem (3) zur sprachgesteuerten Eingabe von Kurznachrichten an einem Telekommunikations-Endgerät (1), insbesondere Mobil- oder Schnurlostelefon,
mit einem sprecherunabhängig arbeitenden Spracherkennermodul (5), in dem ein spezifisches Vokabular zum Erstellen von Kurznachrichten gespeichert ist bzw. verarbeitet werden kann, wobei jedem Element des Vokabulars mindestens ein Phonem zugeordnet ist und jedes Phonem mindestens einen Laut gemäß einer vorgegebenen Lautschrift repräsentiert,
**gekennzeichnet durch**
einen Nachrichtenvokabular-Zwischenspeicher (13) zur temporären Speicherung einer gesendeten oder empfangenen Kurznachricht,
eine mit dem Nachrichtenvokabular-Zwischenspeicher (13) einerseits und dem Spracherkennermodul (5) andererseits verbundene Vokabular-Vergleichereinheit (15) zum Vergleich der jeweils gespeicherten Wortschätze und zur Ausgabe von in der Kurznachricht neu aufgetretenen Wörtern an ein Vokabular-Steuermodul (23),
ein Text-Phonem-Wandlermodul (9) zur Umsetzung der neu aufgetretenen Wörter in die Lautschrift und
das Vokabular-Steuermodul (23) zur Ergänzung des Vokabulars bzw. zur Ersetzung von Elementen desselben **durch** die neu aufgetretenen Wörter sowie den diesen zugeordneten Phonemen.

2. Spracherkennungssystem nach Anspruch 1,
**dadurch gekennzeichnet, daß**
der Spracherkenner und/oder das Text-Phonem-Wandlermodul (9) auf der Basis eines neuronalen Netzes konfiguriert ist.

3. Spracherkennungssystem nach Anspruch 1 oder 2,
**dadurch gekennzeichnet, daß**
eine Texteingabe-Schnittstelle (11) zur direkten Texteingabe von Worten oder Phrasen ausgebildet ist und eine Eingabetastatur, insbesondere eine geräteintegrierte alphanumerische Tastatur mit Tasten-Mehrfachbelegung, oder einen entsprechend ausgebildeten Touchscreen aufweist.

4. Spracherkennungssystem nach einem der vorangehenden Ansprüche,
**dadurch gekennzeichnet, daß**
in dem Spracherkennermodul (5) ein Hidden-Markov-Modell implementiert ist.

5. Spracherkennungssystem nach einem der vorangehenden Ansprüche,
**dadurch gekennzeichnet, daß**
in dem Vokabular-Steuermodul (23) ein Substitutionssteueralgorithmus zur Ersetzung von Elementen des Vokabulars durch neue Worte bzw. Phrasen nach einer vorbestimmten Substitutionsstrategie, insbesondere in Abhängigkeit von dem Zeitpunkt und/oder der Häufigkeit ihres Auftretens an der Texteingabe-Schnittstelle, implementiert ist.

6. Spracherkennungssystem nach einem der vorangehenden Ansprüche,
**gekennzeichnet durch**
Mittel (25) zur Implementierung einer Menüsteuerung zur nutzerindividuellen Verknüpfung von Phrasen mit jeweils einem Sprachbefehl oder einer Metapher und zur Speicherung des Sprachbefehls bzw. der Metapher als Repräsentant der Phrasen im Vokabular des Spracherkenners.

7. Spracherkennungssystem nach Anspruch 6,
**dadurch gekennzeichnet, daß**
die Menüsteuerung (25) zur Verknüpfung jeweils mehrerer Phrasen mit einem Sprachbefehl und zur Anzeige der verfügbaren Phrasen in Reaktion auf die Spracheingabe des Sprachbefehls sowie zur Auswahl der aktuell gewünschten Phrase durch einen zusätzlichen Eingabevorgang ausgebildet ist.

8. Spracherkennungssystem nach einem der vorhergehenden Ansprüche,
**gekennzeichnet durch**
- eine statistische Auswertungseinheit (17) zur Bestimmung statistischer Kenngrößen der neu aufgetretenen Worte und
- eine Kenngrößen-Vergleichereinheit (19) zum Vergleich der ermittelten statistischen Kenngrößen mit entsprechenden Kenngrößen von im Spracherkenner gespeicherten Worten und zur Ausgabe eines das Vergleichsergebnis repräsentierenden Entscheidungssignals an einen Eingang des Vokabular-Steuermoduls (23) zur Initiierung einer Ergänzung oder Substitution des Vokabulars des Spracherkenners im Ansprechen auf das Vergleichsergebnis.

9. Spracherkennungssystem nach einem der vorangehenden Ansprüche,
**dadurch gekennzeichnet, daß**
der Spracherkenner (5) einen Vokabular- und Phrasenspeicher (7) mit mehreren Speicherbereichen (7A, 7B, 7C) aufweist, von denen mindestens ein erster Speicherbereich (7A) mit einem invarianten Basisvokabular belegt ist.

10. Spracherkennungssystem nach Anspruch 9,
**dadurch gekennzeichnet, daß**
ein zweiter Speicherbereich (7C) des Vokabular- und Phrasenspeichers zur Aufnahme einer vorbestimmten Maximalzahl von Phrasen und wahlweise zugeordneten Sprachbefehlen ausgebildet ist.

11. Spracherkennungssystem nach Anspruch 1 oder 8 und Anspruch 9 oder 10,
**dadurch gekennzeichnet, daß**
aus dem Vokabular empfangener und/oder gesendeter Kurznachrichten automatisch übernommene Worte ohne Beeinflussung des Speicherinhaltes des zweiten Speicherbereiches (7C) in den ersten (7A) oder einen dritten Speicherbereich (7B) des Vokabularspeichers abgelegt werden.

12. Spracherkennungssystem nach einem der Ansprüche 3 bis 11,
**dadurch gekennzeichnet, daß**
die Texteingabe-Schnittstelle (11) als externe Schnittstelle zu einem anderen Spracherkennungssystem oder externen Gerät, insbesondere PC oder mobilen Computer, ausgebildet ist.

13. Telekommunikations-Endgerät mit einem Sprachsteuerungssystem nach einem der vorangehenden Ansprüche.

14. Spracherkennungsverfahren zur sprachgesteuerten Eingabe von Kurznachrichten an einem Telekommunikations-Endgerät (1), insbesondere Mobiltelefon, wobei
ein Spracherkenner-Vokabular zum Erstellen von Kurznachrichten ein Basisvokabular mit Elementen aufweist, ein Element ein Wort oder eine Phrase ist, jedem Element mindestens ein Phonem zugeordnet ist und jedes Phonem gemäß einer vorgegebenen Lautschrift repräsentiert wird, und wobei
in einem ersten Schritt das Basisvokabular bereitgestellt wird,
**dadurch gekennzeichnet, dass**
in einem zweiten Schritt Wörter von Kurznachrichten mit dem Basisvokabular verglichen werden, um Wörter zu erfassen, die nicht im Basisvokabular enthalten sind,
den erfassten Wörtern durch Text-Phonem-Wandlung Phonemfolgen zugeordnet werden und
die erfassten Wörter und zugeordneten Phonemfolgen in das Basisvokabular übernommen werden.

15. Spracherkennungsverfahren nach Anspruch 14,
**dadurch gekennzeichnet, daß**
der erste Schritt der Bereitstellung des Basisvokabulars durch Vorprogrammierung ausgeführt wird.

16. Spracherkennungsvertahren nach Anspruch 14,
**dadurch gekennzeichnet, daß**
der erste Schritt der Bereitstellung des Basisvokabulars zusammen mit dem zweiten Schritt der Ergänzung desselben ohne vorherige Programmierung ausgeführt wird.

17. Spracherkennungsverfahren nach einem der Ansprüche 14 bis 16,
**dadurch gekennzeichnet, dass**
der zweite Schritt auch eine manuelle Eingabe neuer Worte oder Phrasen durch den Nutzer umfasst.

18. Spracherkennungsverfahren nach Anspruch 17,
**dadurch gekennzeichnet, daß**
das Basisvokabular in einem ersten Speicherbereich (7A, 7B) eines Vokabular- und Phrasenspeichers (7) und manuell eingegebene neue Worte oder Phrasen in einem zweiten, separaten Speicherbereich (7C) des Vokabular- und Phrasenspeichers (7) gespeichert werden derart, daß übernommene Worte Elemente des Basisvokabulars, nicht aber manuell eingegebene Worte oder Phrasen ersetzen können.

19. Spracherkennungsverfahren nach einem der Ansprüche 14 bis 18,
**dadurch gekennzeichnet, daß**
im ersten Schritt die Elemente des Basisvokabulars jeweils unter Angabe einer insbesondere ihre Bedeutung für Kurznachrichten repräsentierenden statistischen Kenngröße gespeichert werden,
die in gesendeten und/oder empfangenen Kurznachrichten erfaßten neuen Worte einer statistischen Auswertung zur Gewinnung einer, insbesondere ihre Bedeutung für Kurznachrichten repräsentierenden, statistischen Kenngröße unterzogen und Elemente des Basisvokabulars durch übernommene Wörter in Abhängigkeit vom Ergebnis eines Vergleichs ihrer jeweiligen statistischen Kenngrößen substituiert werden.

20. Spracherkennungsverfahren nach einem der Ansprüche 17 bis 19,
**dadurch gekennzeichnet, daß**
manuell eingegebene neue Worte oder Phrasen und wahlweise Elemente des Basisvokabulars in Zuordnung zu Sprachbefehlen oder Metaphern gespeichert und im Betrieb des Spracherkennungssystems nach Eingabe des zugeordneten Sprachbefehls oder der Metapher zusammen mit weiteren zugehörigen Worten oder Phrasen zur Auswahl im Rahmen einer Menüführung angezeigt werden.

## Claims

1. Speech recognition system (3) for the speech-controlled inputting of short messages into a telecommunications terminal (1), in particular mobile phone or cordless phone,
having a speech recognition module (5) which operates independently of the speaker and in which a specific vocabulary for creating short messages is stored and/or can be processed,
each element of the vocabulary being assigned at least one phoneme and each phoneme representing at least one sound according to a predetermined phonetic script,
**characterized by**
a message vocabulary buffer (13) for temporarily storing a transmitted or received short message,
a vocabulary comparator unit (15), connected to the message vocabulary buffer (13) on the one hand and to the speech recognition module (5) on the other, for the purpose of comparing the respectively stored vocabulary items and for outputting to a vocabulary control module (23) words which have newly occurred in the short message,
a text/phoneme converter module (9) for converting the words which have newly occurred into the phonetic script and
the vocabulary control module (23) for supplementing the vocabulary or for replacing elements of the vocabulary by the words which have newly occurred and the phonemes assigned to them.

2. Speech recognition system according to Claim 1, **characterized in that** the speech recognizer and/or the text/phoneme converter module (9) is configured on the basis of a neural network.

3. Speech recognition system according to Claim 1 or 2, **characterized in that** a text input interface (11) is formed for direct text input of words or phrases and has an input keypad, in particular an alpha-numeric keypad, which is integrated into the device and has multiple assignment of keys or an appropriately configured touchscreen.

4. Speech recognition system according to one of the preceding claims, **characterized in that** a hidden Markov model is implemented in the speech recognition module (5).

5. Speech recognition system according to one of the preceding claims, **characterized in that** a substitution control algorithm for replacing elements of the vocabulary by new words or phrases in accordance with a predetermined substitution strategy, in particular as a function of the time and/or frequency of their occurrence at the text input interface, is implemented in the vocabulary control module (23).

6. Speech recognition system according to one of the preceding claims, **characterized by** means (25) for implementing a menu control for user-specific logic linking of phrases to in each case one voice instruction or a metaphor, or for storing the voice instruction or metaphor as a representation of the phrases in the vocabulary of the speech recognizer.

7. Speech recognition system according to Claim 6, **characterized in that** the menu controller (25) is configured to logically link in each case a plurality of phrases to a voice instruction, and to display the available phrases in reaction to the voice input of the voice instruction and to select the currently desired phrase by means of an additional input operation.

8. Speech recognition system according to one of the preceding claims, **characterized by**
- a statistical evaluation unit (17) for determining statistical characteristic variables of the newly occurred words and
- a characteristic variable comparator unit (19) for comparing the acquired statistical characteristic variables with correspondingly characteristic variables of words stored in the speech recognizer, and for outputting a decision signal, representing the comparison result, to an input of the vocabulary control module (23) in order to initiate supplementation or substitution of the vocabulary of the speech recognizer in response to the comparison result.

9. Speech recognition system according to one of the preceding claims, **characterized in that** the speech recognizer (5) has a vocabulary and phrase memory (7) with a plurality of memory areas (7A, 7B, 7C), at least a first memory area (7A) which contains a nonvariant basic vocabulary.

10. Speech recognition system according to Claim 9, **characterized in that** a second memory area (7C) of the vocabulary and phrase memory is designed to hold a predetermined maximum number of phrases and optionally assigned voice instructions.

11. Speech recognition system according to Claim 1 or 8 and Claim 9 or 10, **characterized in that** words which are transferred from the vocabulary of received and/or transmitted short messages are stored, without influencing the memory content of the second memory area (7C), in the first (7A) or a third memory area (7B) of the vocabulary memory.

12. Speech recognition system according to one of Claims 3 to 11, **characterized in that** the text input interface (11) is designed as an external interface to another speech recognition system or external apparatus, in particular PC or mobile computer.

13. Telecommunications terminal having a voice control system according to one of the preceding claims.

14. Speech recognition method for the speech-controlled inputting of short messages into a telecommunications terminal (1), in particular mobile phone,
a speech recognizer vocabulary for creating short messages having a basic vocabulary with elements, an element being a word or a phrase, each element being assigned at least one phoneme and each phoneme being represented according to a predefined phonetic script, and
the basic vocabulary being made available in a first script,
**characterized in that**, in a second step, words of short messages are compared with the basic vocabulary in order to acquire words which are not contained in the basic vocabulary,
the acquired words are assigned phoneme sequences by means of text/phoneme conversion, and
the aquired words and assigned phoneme sequences are transferred into the basic vocabulary.

15. Speech recognition method according to Claim 14, **characterized in that** the first step for making available the basic vocabulary is carried out by means of reprogramming.

16. Speech recognition method according to Claim 14, **characterized in that** the first step for making available the basic vocabulary is carried out together with the second step for supplementing said basic vocabulary without previous programming.

17. Speech recognition method according to one of Claims 14 to 16, **characterized in that** the second step also comprises manual inputting of new words or phrases by the user.

18. Speech recognition method according to Claim 17, **characterized in that** the basic vocabulary is stored in a first memory area (7A, 7B) of a vocabulary and phrase memory (7) and manually input new words or phrases are stored in a second, separate memory area (7C) of the vocabulary and phrase memory (7), in such a way that transferred words can replace elements of the basic vocabulary, but manually input words or phrases cannot.

19. Speech recognition method according to one of Claims 14 to 18, **characterized in that**, in the first step, the elements of the basic vocabulary are stored, in each case with a specification of a statistical characteristic variable which represents in particular their significance for short messages, the new words which are detected in transmitted and/or received short messages are subjected to statistical evaluation in order to acquire a statistical characteristic variable which represents in particular their significance for short messages, and elements of the basic vocabulary are substituted by transferred words as a function of the result of a comparison of their respective statistical characteristic variables.

20. Speech recognition method according to one of Claims 17 to 19, **characterized in that** manually input new words or phrases and optionally elements of the basic vocabulary are stored with an assignment of voice instructions or metaphors and displaced, together with further associated words or phrases, for selection within the scope of a menu prompting system during the operation of the speech recognition system after the assigned voice instruction or the metaphor has been input.

## Revendications

1. Système (3) de reconnaissance vocale pour la rédaction de courts messages par commande vocale sur un terminal de télécommunication (1), en particulier un téléphone mobile ou sans fil,
avec un module (5) de reconnaissance vocale qui travaille indépendamment du locuteur, dans lequel un vocabulaire spécifique de rédaction de courts messages est conservé en mémoire ou peut être transformé, au moins un phonème étant associé à chaque élément du vocabulaire et chaque phonème représentant au moins une locution selon un symbole phonétique prédéterminé,
**caractérisé par**
une mémoire intermédiaire (13) de vocabulaire de messages pour conserver temporairement un court message envoyé ou reçu,
une unité (15) de comparaison des vocabulaires reliée d'une part à la mémoire intermédiaire (13) du vocabulaire des messages et d'autre part au module (5) de reconnaissance vocale, pour comparer les vocabulaires conservés à chaque fois en mémoire et délivrer à un module (23) de commande de vocabulaire les mots nouvellement apparus dans le court message,
un module (9) de conversion texte-phonème pour convertir en symboles phonétiques les mots nouvellement introduits, et
le module (23) de commande du vocabulaire qui complète le vocabulaire ou remplace des éléments de celui-ci par les mots nouvellement introduits ainsi que par les phonèmes qui leur sont associés.

2. Système de reconnaissance vocale selon la revendication 1,
**caractérisé en ce que**
la reconnaissance vocale et/ou le module (9) de conversion texte-phonème sont configurés sur base d'un réseau neuronal.

3. Système de reconnaissance vocale suivant les revendications 1 ou 2,
**caractérisé en ce qu'**
une interface (11) d'introduction de texte est configurée pour introduire directement des mots ou des phrases et présente un clavier d'introduction, en particulier un clavier alphanumérique intégré à l'appareil et doté de plusieurs fonctions par touche ou un écran tactile configuré de façon appropriée.

4. Système de reconnaissance vocale selon l'une des revendications précédentes,
**caractérisé en ce qu'**
un modèle caché de Markov ("Hidden Markov Model" - HMM) est installé dans le module (5) de reconnaissance vocale.

5. Système de reconnaissance vocale selon l'une des revendications précédentes,
**caractérisé en ce qu'**
un algorithme de remplacement qui remplace des éléments du vocabulaire par de nouveaux mots ou de nouvelles phrases en fonction d'une stratégie prédéterminée de remplacement, en particulier en fonction du moment et/ou de la fréquence de leur apparition sur l'interface d'introduction de textes, est installé dans le module (23) de commande du vocabulaire.

6. Système de reconnaissance vocale selon l'une des revendications précédentes,
**caractérisé par**
des moyens (25) de mise en oeuvre d'une commande de menu qui permet à un utilisateur individuel d'associer des phrases à chaque fois à une commande vocale ou à une métaphore et de mettre en mémoire la commande vocale ou la métaphore comme représentant de la phrase dans le vocabulaire de la reconnaissance vocale.

7. Système de reconnaissance vocale selon la revendication 6,
**caractérisé en ce que**
la commande de menu (25) est configurée pour associer plusieurs phrases respectives à une commande vocale et pour afficher les phrases disponibles en réponse à l'introduction vocale de la commande vocale, ainsi que pour sélectionner par une opération supplémentaire d'introduction la phrase effectivement souhaitée.

8. Système de reconnaissance vocale selon l'une des revendications précédentes,
**caractérisé par**
- une unité (17) d'évaluation statistique qui détermine des caractéristiques statistiques des mots nouvellement introduits et
- une unité (19) de comparaison de caractéristiques qui compare les caractéristiques statistiques déterminées à des caractéristiques correspondantes de mots conservés en mémoire dans la reconnaissance vocale et qui délivre un signal de décision, qui représente le résultat de la comparaison, à une entrée du module (23) de commande du vocabulaire, pour lancer un complément ou un remplacement du vocabulaire de la reconnaissance vocale en réponse au résultat de la comparaison.

9. Système de reconnaissance vocale selon l'une des revendications précédentes,
**caractérisé en ce que**
la reconnaissance vocale (5) présente une mémoire (7) de vocabulaire et de phrases qui comporte plusieurs zones de mémoire (7A, 7B, 7C), parmi lesquelles au moins une première zone de mémoire (7A) est occupée par un vocabulaire de base invariant.

10. Système de reconnaissance vocale selon la revendication 9,
**caractérisé en ce qu'**
une deuxième zone de mémoire (7C) de mémoire de phrases et de vocabulaire est configurée pour recevoir un nombre maximum prédéterminé de phrases et de commandes vocales qui leur sont sélectivement associées.

11. Système de reconnaissance vocale selon les revendications 1 ou 8 et les revendications 9 ou 10,
**caractérisé en ce que**
les mots repris automatiquement dans le vocabulaire des courts messages reçus et/ou envoyés peuvent être placés dans la première zone de mémoire (7A) ou dans une troisième zone de mémoire (7B) de la mémoire de vocabulaire sans agir sur le contenu de la deuxième zone de mémoire (7C).

12. Système de reconnaissance vocale selon l'une des revendications 3 à 11,
**caractérisé en ce que**
l'interface (11) d'introduction de texte est configurée comme interface externe avec un autre système de reconnaissance vocale ou un appareil externe, en particulier un PC ou un ordinateur portable.

13. Terminal de télécommunication doté d'un système de reconnaissance vocale selon l'une des revendications précédentes.

14. Procédé de reconnaissance vocale pour la rédaction de courts messages sous commande vocale sur un terminal de télécommunication (1), en particulier un téléphone mobile, dans lequel
un vocabulaire de reconnaissance vocale présente un vocabulaire de base qui permet de rédiger de courts messages, avec des éléments dont chacun est un mot ou est une phrase, au moins un phonème étant associé à chaque élément et chaque phonème étant représenté par un symbole prédéterminé, et dans lequel
le vocabulaire de base est préparé dans une première étape,
**caractérisé en ce que**
dans une deuxième étape, les mots de courts messages sont comparés au vocabulaire de base pour détecter les mots qui ne sont pas contenus dans le vocabulaire de base,
des successions de phonèmes sont associées aux mots détectés par la conversation texte-phonème et
les mots détectés et les successions de phonèmes qui leur sont associées sont repris dans le vocabulaire de base.

15. Procédé de reconnaissance vocale selon la revendication 14,
**caractérisé en ce que**
la première étape de la préparation du vocabulaire de base est réalisée par préprogrammation.

16. Procédé de reconnaissance vocale selon la revendication 14,
**caractérisé en ce que**
la première étape de préparation du vocabulaire de base est réalisée sans programmation préalable en même temps que la deuxième étape de complémentation de ce dernier.

17. Procédé de reconnaissance vocale selon l'une des revendications 14 à 16,
**caractérisé en ce que**
la deuxième étape comprend également une introduction manuelle de nouveaux mots ou de nouvelles phrases par l'utilisateur.

18. Procédé de reconnaissance vocale selon la revendication 17,
**caractérisé en ce que**
le vocabulaire de base est conservé dans une première zone de mémoire (7A, 7B) d'une mémoire (7) de vocabulaire et de phrases, et les nouveaux mots ou nouvelles phrases introduits manuellement étant conservés dans une deuxième zone de mémoire (7C), séparée des premières, de la mémoire (7) de vocabulaire et de phrases, de telle sorte que les mots repris peuvent remplacer des éléments du vocabulaire de base, cela n'étant pas le cas pour les mots ou phrases introduits manuellement.

19. Procédé de reconnaissance vocale selon l'une des revendications 14 à 18,
**caractérisé en ce que**
dans la première étape, les éléments du vocabulaire de base sont tous conservés en mémoire avec indication à chaque fois d'une caractéristique statistique qui représente en particulier leur importance dans des courts messages,
les nouveaux mots détectés dans les courts messages émis et/ou reçus subissant une évaluation statistique en vue d'obtenir une caractéristique statistique qui représente en particulier leur importance dans des courts messages, les éléments du vocabulaire de base étant remplacés par les mots repris en fonction du résultat d'une comparaison de leurs caractéristiques statistiques respectives.

20. Procédé de reconnaissance vocale selon l'une des revendications 17 à 19,
**caractérisé en ce que**
les nouveaux mots ou nouvelles phrases introduits manuellement et des éléments sélectionnés du vocabulaire de base sont conservés en association à des commandes vocales ou des métaphores et, lorsque le système de reconnaissance vocale fonctionne, sont affichés après introduction de la commande vocale ou de la métaphore associée en même temps que d'autres mots ou phrases associés pour être sélectionnés dans le cadre d'une commande par menu.
